# EUROPEAN PATENT APPLICATION

(11) **EP 3 483 252 A1**
(43) Date of publication of application: **15.05.2019**
(21) Application number: 17823784.8
(22) Date of filing: 26.01.2017
(51) Int. Cl.: C12C 7/00, A23L 2/00, C12C 11/02, C12G 3/00

(54) **METHOD FOR MANUFACTURING FERMENTED BEER-LIKE EFFERVESCENT BEVERAGE HAVING REDUCED OFF-FLAVOR**

(30) Priority: 06.07.2016 JP 2016134534
(71) Applicant: Asahi Breweries, Ltd., Tokyo 130-8602 (JP)
(72) Inventor: NOBA Shigekuni, Moriya-shi Ibaraki 302-0106 (JP); YAKO Nana, Moriya-shi Ibaraki 302-0106 (JP)
(74) Representative: Desaix, Anne
(86) International application number: PCT/JP2017/002716
(87) International publication number: WO 2018/008175

(57) **Abstract**

The present invention provides a process for producing a fermented beer-like effervescent beverage in which generation of an onion-like odor is suppressed by suppressing a content of 2M3MB in the final product. The present invention is a process for producing a fermented beer-like effervescent beverage including a fermentation step of inoculating yeast into a fermentation raw material solution to ferment, wherein a content of 2,3-epoxy-3-methylbutanal in the fermentation raw material solution prior to the inoculation of yeast or in the fermentation solution during the fermentation step is controlled, and is a process for producing a fermented beer-like effervescent beverage including a fermentation step of inoculating yeast into a fermentation raw material solution to ferment, wherein a content of 2,3-epoxy-3-methylbutanal in the fermentation raw material solution prior to the inoculation of yeast or in the fermentation solution during the fermentation step is measured.

## Description

### TECHNICAL FIELD

The present invention relates to a process for producing a fermented beer-like effervescent beverage in which generation of an onion-like odor, which is a kind of off-flavor in beer-like effervescent beverages, is suppressed.

Priority is claimed on Japanese Patent Application No. 2016-134534, filed July 6, 2016, the content of which is incorporated herein by reference.

### BACKGROUND ART

In fermented beer-like effervescent beverages such as beer, happoshu or the like, off-flavors such as a burnt smell/light-struck smell-like smell, an onion-like odor or the like are sometimes confirmed, and in order to improve the quality of the fermented beer-like effervescent beverage, control of these off-flavors is important. If the causative substance and the mechanism of its production are elucidated, it is expected that the off-flavors can be controlled efficiently. However, there are a variety of causative substances of off-flavors and it is difficult to elucidate their production mechanism. For example, although it is known that 2-mercapto-3-methyl-1-butanol (2M3MB) is a causative substance of an onion-like odor in beer (for example, Non-Patent Document 1), the action mechanism by which 2M3MB is produced has not yet been elucidated.

On the other hand, it is known that in fermented beer-like effervescent beverages, oxidation is accelerated by the lapse of time and the rise in temperature, and thus the quality is deteriorated. For this reason, suppressing the amount of oxygen mixed in each step is important for producing a fermented beer-like effervescent beverage with more stable quality. For example, Patent Document 1 discloses a process for producing a malt alcoholic beverage including a preparation step in which wort is collected by agitating and mixing raw materials containing malt and water for preparation, then saccharifying the resulting mixture by warming; a fermentation step in which yeast is added to ferment; a sake storage step in which the fermentation-finished liquid is stored; and a filtration/filling step in which the sake storage-finished liquid is filtered and filled in a container, wherein oxidation in the production process of the malt alcoholic beverage is suppressed by suppressing the oxygen concentration in the atmosphere in all of the steps or in some of the steps.

### PRIOR ART LITERATURE

### Patent Documents

Patent document 1: Japanese Unexamined Patent Application, First Publication No. 2000-4866

### Non-Patent Document

Non-patent document 1: Olsen et al., Carlsberg Research Communication, 1988, vol.53, p.1-9.
Non-patent document 2: Coghe et al., JOURNAL OF THE INSTITUTE OF BREWING, 2005, vol.111(1), p.51-60.
Non-patent document 3: Iijima et al., Journal of Applied Microbiology, 2010, vol. 109, p.1906-1913.

### DISCLOSURE OF INVENTION

### Problems to be Solved by the Invention

An object of the present invention is to provide a process for producing a fermented beer-like effervescent beverage in which generation of an onion-like odor is suppressed by suppressing a content of 2M3MB in the final product. Means for Solving the Problems

As a result of extensive research to solve the above-mentioned problems, the present inventors have found that when 2M3MB is produced in the process of producing a fermented beer-like effervescent beverage, 2,3-epoxy-3-methyl-butanal (EMBal) is a causative substance of 2M3MB, and 2M3MB is produced by EMBal being metabolized by yeast in the presence of oxygen, and completed the present invention.

The process for producing a fermented beer-like effervescent beverage and the fermentation raw material solution according to the present invention are the following [1] to [8].
[1] A process for producing a fermented beer-like effervescent beverage, comprising
   a fermentation step of inoculating yeast into a fermentation raw material solution to ferment, wherein
   a content of 2,3-epoxy-3-methylbutanal in the fermentation raw material solution prior to the inoculation of yeast or in the fermentation solution during the fermentation step is controlled.
[2] The process for producing a fermented beer-like effervescent beverage according to [1], wherein
   the control of the content of 2,3-epoxy-3-methylbutanal is performed by controlling an amount of oxygen mixed in the fermentation raw material solution or mixed in the fermentation solution.
[3] The process for producing a fermented beer-like effervescent beverage according to [1] or [2], wherein
   a concentration of 2,3-epoxy-3-methylbutanal in the fermentation raw material solution or in the fermentation solution is controlled to be 17 ppb or less.
[4] The process for producing a fermented beer-like effervescent beverage according to any one of [1] to [3], wherein
   a content of iso-α-acid in the fermentation raw material solution or in the fermentation solution is 90 ppm or less.
[5] The process for producing a fermented beer-like effervescent beverage according to any one of [1] to [4], wherein
   a temperature of the fermentation raw material solution or the fermentation solution is 5 to 100 °C.
[6] The process for producing a fermented beer-like effervescent beverage according to any one of [1] to [5], further comprising
   a measurement step of measuring the concentration of 2,3-epoxy-3-methylbutanal in the fermentation raw material solution or in the fermentation solution.
[7] A process for producing a fermented beer-like effervescent beverage, comprising
   a fermentation step of inoculating yeast into a fermentation raw material solution to ferment, and
   a measurement step of measuring a content of 2,3-epoxy-3-methylbutanal in the fermentation raw material solution prior to the inoculation of yeast or in the fermentation solution during the fermentation step.
[8] A fermentation raw material solution comprising 2,3-epoxy-3-methylbutanal at a concentration of 17ppb or less.

### Effects of the Invention

According to the process for producing a fermented beer-like effervescent beverage of the present invention, production of 2M3MB in the production process can be suppressed, and a fermented beer-like effervescent beverage with reduced onion-like odor can be produced.

In addition, according to the fermentation raw material solution of the present invention, a fermented beer-like effervescent beverage in which an onion-like odor is suppressed can be produced.

### BRIEF DESCRIPTION OF THE DRAWINGS

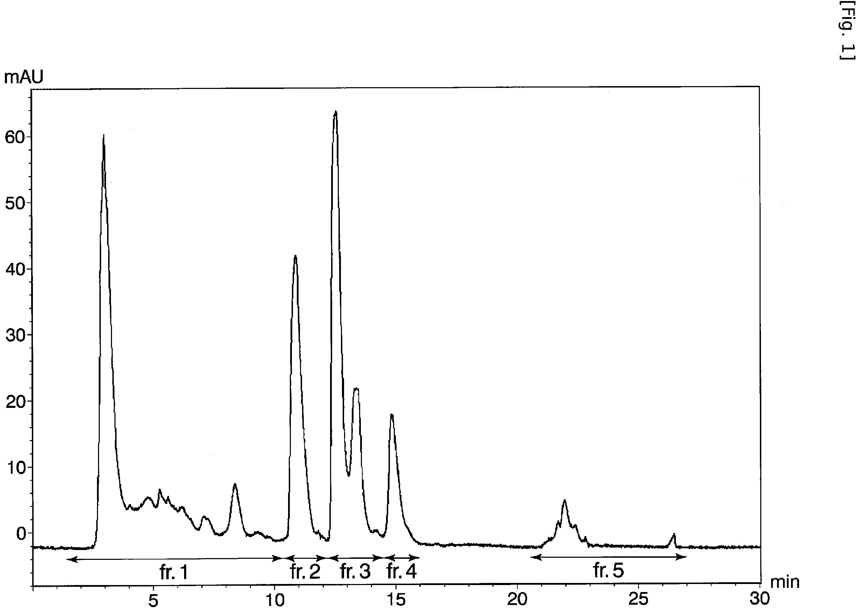

FIG. 1 is a chromatograph of preparative HPLC on a hop extract solution after isomerization treatment carried out in Reference Example 3.

### BEST MODE FOR CARRYING OUT THE INVENTION

In the present invention and the specification of the present application, the term "fermented beer-like effervescent beverage" refers to an effervescent beverage produced through a fermentation step, which has a flavor, taste and texture equivalent to or similar to that of beer regardless of alcohol content or use/non-use of malt, and has a high thirst-quenching sensation as well as drinkability. That is, the fermented beer-like effervescent beverage may be an alcoholic beverage, and may be a so-called non-alcoholic beverage or alcoholic beverage having an alcohol content of less than 1% by volume. Further, it may be a beverage using malt as a raw material, or a beverage not using malt as a raw material. Specific examples of the fermented beer-like effervescent beverage include beer, sparkling sake using malt as a raw material, an effervescent alcoholic beverage not using malt, a low alcohol effervescent beverage, non-alcohol beer and the like. In addition, it may be a liqueur using malt as a raw material and obtained by blending a beverage produced through a fermentation step with an alcohol-containing distillate. The term "alcohol-containing distillate" refers to a solution containing an alcohol obtained by a distillation operation, and for example, an alcohol for raw materials, or a distilled alcoholic beverage such as spirits, whiskey, brandy, vodka, rum, tequila, gin, shochu and the like, may be used.

The first aspect of the process for producing a fermented beer-like effervescent beverage according to the present invention includes a fermentation step of inoculating yeast into a fermentation raw material solution to ferment, wherein a content of EMBal in the fermentation raw material solution prior to the inoculation of yeast or in the fermentation solution during the fermentation step is controlled. EMBal is a precursor of 2M3MB, which is a causative substance of an onion-like odor as shown in Examples described later, and 2M3MB is produced by EMBal being metabolized by yeast in the presence of oxygen. For this reason, by controlling the production of EMBal in the production process, particularly by controlling the content of EMBal in the fermentation solution, the content of 2M3MB in the fermented beer-like effervescent beverage as the final product can be controlled. That is, by suppressing the content of EMBal to a low level until the end of the fermentation step, a fermented beer-like effervescent beverage with a sufficiently low content of 2M3MB and suppressed onion-like odor can be produced. In the present invention, since the content of 2M3MB in the beverage can be sufficiently suppressed, it is preferable to control the EMBal concentrations of the fermentation raw material solution prior to the inoculation of yeast and the fermentation solution during the fermentation step to 17 ppb or less, more preferably to 10 ppb or less, and even more preferably to 5 ppb or less.

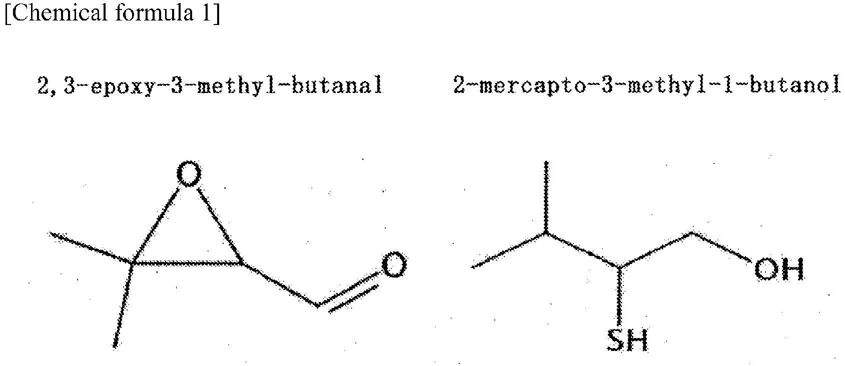

In the process for producing a fermented beer-like effervescent beverage according to the present invention, the fermented beer-like effervescent beverage can be produced in the same manner as a general production method of a fermented beer-like effervescent beverage except that the content of EMBal in the fermentation raw material solution prior to inoculation of yeast or the fermentation solution in the fermentation step is controlled. Therefore, first of all, a general production method of fermented beer-like effervescent beverage will be explained. A general fermented beer-like effervescent beverage can be produced by the steps of preparation (preparation of fermentation raw material solution), fermentation, sake storage and filtration.

First, in the preparation step (preparation of fermentation raw material solution step), a fermentation raw material solution is prepared from one or more kinds of raw materials selected from the group consisting of cereal raw materials and carbohydrate raw materials. Specifically, first, a mixture containing raw material water and at least one of cereal raw materials and carbohydrate raw materials is prepared and heated to saccharify starches such as the cereal raw materials. As a raw material for the sugar solution, only the cereal raw material may be used, or only the sugar raw material may be used, or a mixture of both may be used. Examples of the cereal raw material include barley, wheat, and malts thereof, rice, corn, beans such as soybean, potatoes and the like. As the cereal raw material, a grain syrup, a grain extract or the like can be used, and a grain pulverized product obtained by a grinding process is preferable. The grinding process of the grains can be carried out by a conventional method. As the grain pulverized product, it may be one subjected to a treatment which is usually done before and after the pulverization treatment, such as a malt crushed product, corn starch, corn grits and the like. In the present invention, the pulverized cereal product to be used is preferably a malt pulverized product. By using the malt pulverized product, it is possible to produce a fermented beer-like effervescent beverage whose beer-like taste is clearer. The malt pulverized product may be one obtained by germinating barley, for example, two-row barley according to a conventional method, drying it and then pulverizing it to a predetermined particle size. In addition, as the cereal raw material used in the present invention, one kind of cereal raw material may be used, or a mixture of plural kinds of cereal raw materials may be used. For example, pulverized malt may be used as a main raw material and a pulverized product of rice or corn may be used as an auxiliary raw material. Examples of the carbohydrate raw material include sugars such as liquid sugar.

An auxiliary raw material other than the cereal raw materials and water may be added to the mixture. Examples of such an auxiliary raw material include hops, dietary fiber, yeast extract, fruit juice, a bittering agent, a coloring agent, herbs, fragrance and the like. In addition, glycosylases such as α-amylase, glucoamylase, pullulanase and the like and enzymatic agents such as protease can be added as necessary.

The saccharification treatment is carried out by using enzymes derived from the cereal raw material and the like, or by using separately added enzymes. The temperature at the time of saccharification treatment and the time may be appropriately adjusted in consideration of the type of the cereal raw material, the ratio of the cereal raw material to the whole fermented raw material, the type of enzyme, the amount of the mixture, the quality of the intended fermented beer-like effervescent beverage and the like. For example, the saccharification treatment can be carried out by a conventional method such as holding a mixture containing cereal raw materials and the like at 35 to 70 °C for 20 to 90 minutes.

A broth (boiled product of sugar solution) can be prepared by boiling the sugar solution obtained after the saccharification treatment. It is preferable to filter the sugar solution prior to the boiling treatment and then boil the obtained filtrate. In addition, instead of the filtrate of the sugar solution, one obtained by adding hot water to malt extract may also be used to boil. The boiling method and its conditions can be appropriately adjusted.

A fermented beer-like effervescent beverage having a desired flavor can be produced by suitably adding herbs and the like prior to the boiling treatment or during the boiling treatment. Particularly, hops are preferably added prior to the boiling treatment or during the boiling treatment. By the boiling treatment in the presence of hops, flavor/aroma components of the hops can be efficiently extracted. The addition amount of the hops, the mode of addition (for example, addition in several portions) and boiling conditions can be appropriately adjusted.

It is preferable to remove any residues such as protein produced by precipitation from the prepared broth after the preparation step and before the fermentation step. Removal of the residues may be carried out by any solid-liquid separation treatment, but in general, precipitates are removed using a bath called Whirlpool. The temperature of the broth at this time may be 15 °C or higher, and in general, it is 50 to 80 °C. The broth after removing the residues (filtrate) is cooled to an appropriate fermentation temperature by a plate cooler or the like. The broth after removing the residues is used as the fermentation raw material solution.

Next, as the fermentation step, fermentation is carried out by inoculating yeast into the cooled fermentation raw material solution. The cooled fermentation raw material solution may be used as it is for the fermentation step, or it may be subjected to the fermentation step after adjusting to a desired extract concentration. The yeast used for fermentation is not particularly limited, and it can be appropriately selected from among yeasts usually used for producing alcoholic beverages. Although it may be a high fermentation yeast or a low fermentation yeast, because it is easy to apply to a large brewing facility, a low fermentation yeast is preferable.

Furthermore, in the sake storage step, the resulting fermentation solution is aged in a storage tank, stored and stabilized at a low temperature condition of about 0 °C, and then in the filtration step, the fermentation solution after aging is filtered to remove yeast and proteins insoluble in the temperature range, thereby obtaining a desired fermented beer-like effervescent beverage. The filtration treatment may be any method as long as the yeast can be removed by filtration, and for example, diatomaceous earth filtration, filter filtration with a filter having an average pore diameter of about 4 to 5 µm, and the like can be mentioned.

EMBal is produced by bringing oxygen into contact with isomerized hops, as shown in the Examples described later, and the precursor of EMBal is a component derived from the isomerized hops. For this reason, for example, the content of EMBal in the fermentation solution in the fermentation step can be suppressed low by selecting a hop variety having a relatively small content of a component to be a precursor of EMBal by isomerization treatment as a raw material, or by using an isomerized hop having a relatively small content of EMBal precursor as a raw material. In the case of using hops as a raw material, it is also possible to control the content of EMBal in the fermentation solution to be low by appropriately adjusting the conditions of the isomerization treatment in the preparation step, e.g. boiling conditions of the sugar solution obtained after the saccharification treatment. In addition, when the bitterness unit of the fermentation raw material solution is high or the iso-α-acid concentration is high, the content of EMBal in the fermentation solution in the fermentation step tends to increase. Therefore, for example, by adjusting the iso-α-acid concentration in the fermentation raw material solution prior to the inoculation of yeast to 90 ppm or less, preferably 50 ppm or less, the content of EMBal in the fermentation solution can be suppressed low.

In addition, an EMBal formation reaction from the precursor of EMBal is possible within a wide range of 5 to 100 °C, and its production efficiency is also affected by temperature. The higher the temperature of the fermentation raw material solution or the fermentation solution, the easier it is to produce EMBal. Therefore, by controlling the conditions of the temperature after addition of hops in the preparation step, or by controlling the fermentation temperature in the fermentation step, the content of EMBal in the fermentation solution can be suppressed low.

In addition, although oxygen is not intentionally mixed into the fermentation raw material solution in the preparation step, oxygen is supplied to the fermentation solution at the beginning of the fermentation step in order to grow the yeast. When the oxygen supply amount is larger than the amount required for yeast growth, the excess oxygen in the fermentation solution oxidizes the precursor of EMBal that is brought from the fermentation raw material solution to produce EMBal. Therefore, by controlling the content of dissolved oxygen in the fermentation solution in the fermentation step, the content of EMBal in the fermentation solution can be suppressed low. The content of dissolved oxygen in the fermentation solution can be adjusted by adjusting the feeding condition of the gas containing oxygen to the fermentation solution.

In the case where the content of EMBal in the fermentation raw material solution prior to inoculation of yeast is high, there is a high possibility that unintended mixing of oxygen into the fermentation raw material solution occurs before the start of the fermentation step. If there are minute cracks or voids in the manufacturing facility, oxygen may be mixed therefrom. Therefore, when the content of EMBal in the fermentation raw material solution is high, it is preferable to inspect the manufacturing equipment. In addition, although 2M3MB is produced by oxidation, even if the content of the dissolved oxygen in the solution is monitored in the production process, it cannot be used as an index of whether an onion-like odor is generated in the fermented beer-like effervescent beverage to be produced, because in the case of unintentional oxygen contamination, since oxygen is highly reactive and oxygen in the solution is quickly consumed, there is no relationship between the actual oxygen concentration of the solution and how much oxygen has been exposed in the solution. In contrast, EMBal is a direct substrate of 2M3MB, and thus the content of EMBal is useful as an index of an onion-like odor and eventually as an index of oxidative degradation.

In controlling the content of EMBal, the EMBal concentration in the fermentation raw material solution or fermentation solution may be measured. It is possible to control the carried-in amount of the precursor of EMBal from hops and to adjust the oxygen supply condition in the fermentation step using the obtained measurement value as an indicator. Measurement of the EMBal concentration may be carried out at all times by incorporating it in a preparation step or fermentation step and may be carried out at regular intervals (for example, every 1 to 3 months), and every time the production conditions and the raw material lot or the like change.

The method for measuring the EMBal concentration in the fermentation raw material solution and the fermentation solution is not particularly limited. For example, it can be measured by gas chromatography/mass spectrometry (GC/MS) after adsorbing and removing other substances from the fermentation raw material solution or fermentation solution by chromatography using a solid-phase extraction column such as a reversed-phase column or an anion-exchange column, then extracting the roughly-purified resulting product with an organic solvent having a low polarity such as dichloromethane or the like, followed by dehydrating.

In addition, the process of the second embodiment of the process for producing a fermented beer-like effervescent beverage according to the present invention includes a fermentation step of inoculating yeast into a fermentation raw material solution to ferment, and a step of measuring the content of EMBal in the fermentation raw material solution prior to the inoculation of yeast or in the fermentation solution during the fermentation step. In this process, the production process of a fermented beer-like effervescent beverage including the fermentation step, and the measurement of the EMBal concentration can be carried out in the same manner as in the production process according to the first embodiment.

According to this production process, it is possible to predict the generation of an onion-like odor which was confirmable only after completion of fermentation in the conventional practice, before the fermentation step is completed. For example, when the content of EMBal in the fermentation raw material solution is high, a fermented beer-like effervescent beverage produced from the fermentation raw material solution is expected to have an onion-like odor. Conversely, when the content of EMBal in the fermentation raw material solution is low, it is predicted that a fermented beer-like effervescent beverage with little onion-like odor will be produced from the fermentation raw material solution.

### [Example]

Next, the present invention will be described in more detail with reference to Examples and Reference Examples, but the present invention is not limited to the following Examples and the like.

### <Measurement of EMBal Content>

In the following experiments, the content of EMBal was measured.

First, 20 g of a sample in which a stable isotope of EMBal (D6-2, 3-epoxy-3-methylbutanal) was added as an internal standard substance so that the concentration thereof was 100 ppb, was subjected to a solid-phase extraction column conditioned with methanol and water (anion exchange column "Inert Sep MA-1", manufactured by GL Sciences Inc.). The through-flow liquid of the solid-phase extraction column was collected, and extracted with 3 mL of dichloromethane, then the solvent layer was recovered. This solvent extraction operation was repeated three times, and 5 g of anhydrous sodium sulfate was added to the mixture of all the recovered solvent layers, and dehydrated for 30 minutes or more. Thereafter, the solution was concentrated to about 500 µL with a nitrogen purge and measured by GC/MS under the following conditions.

### (GC/MS condition)

Gas Chromatograph: "Agilent 6890 Gas Chromatograph" (manufactured by Agilent Technologies)
Detector: "MSD 5975" (manufactured by Agilent Technologies)
Column: "DB-WAX capillary column" (length: 60 m, inner diameter: 0.25 mm, film thickness: 0.25 µm, manufactured by Agilent Technologies)
Inlet temperature: 250 °C
Injection mode: pulsed splitless injection mode
Injection volume: 1 µL
Carrier gas: helium (1 mL/min)
Setting of column temperature: 40 °C (holding 5 minutes) - (5 °C/min) -160 °C (5 minutes)
Ionization condition: 70 eV
Measurement mode: single ion-monitoring (SIM) mode
Quantitation: Performed by comparing the area of the peak area of each aroma component with the area of the peak area of the internal standard product.

### [Reference Example 1]

A low fermentation yeast was cultured in a synthetic medium supplemented with EMBal of a chemically synthesized product to confirm the production of 2M3MB.

For the yeast culture, an amino acid-added YNB medium obtained by blending a glucose with a final concentration of 2 mass% and amino acids shown in Table 2 into an YNB (Yeast Nitrogen Base) medium (manufactured by Becton, Dickinson and Company, see Table 1) was used. The YNB medium was a complete synthetic medium and not containing amino acids. The composition of the amino acids to be added was determined according to the composition of 100% malt beer reported by Coghe et al. (Non-Patent Document 2).

**[Table 1]**

| Composition of YBN medium (per 1 L) | |
|---|---|
| Ammonium Sulfate | 5 g |
| Biotin | 2 µg |
| Calcium Pantothenate | 400 µg |
| Folic Acid | 2 µg |
| Inositol | 2000 µg |
| Niacin | 400 µg |
| p-Aminobenzoic Acid | 200 µg |
| Pyridoxine Hydrochloride | 400 µg |
| Riboflavin | 200 µg |
| Thiamin Hydrochloride | 400 µg |
| Boric Acid | 500 µg |
| Copper Sulfate | 40 µg |
| Potassium Iodide | 100 µg |
| Ferric Chloride | 200 µg |
| Manganese Sulfate | 400 µg |
| Sodium Molybdate | 200 µg |
| Zinc Sulfate | 400 µg |
| Monopotassium Phosphate | 1 g |
| Magnesium Sulfate | 0.5 g |
| Sodium Chloride | 0.1 g |
| Calcium Chloride | 0.1 g |

**[Table 2]**

| Added Amount of Amino Acid | (mg/L) |
|---|---|
| Pro | 340 |
| Leu | 117 |
| Arg | 105 |
| Phe | 103 |
| Val | 102 |
| Gln | 89 |
| Ala | 86 |
| Tyr | 74 |
| Lys | 65 |
| Ile | 62 |
| Asn | 53 |
| Asp | 49 |
| Ser | 44 |
| Glu | 43 |
| Thr | 43 |
| Trp | 41 |
| His | 41 |
| Gly | 27 |
| Met | 21 |

A chemically synthesized product of EMBal was added to an amino acid-added YNB medium so that the concentration thereof was 20 ppb, and yeast was further added so that the concentration thereof was 20 × 10⁶ cells/mL and fermented at 15 °C for 3 days. The fermentation solution after the fermentation was completed was centrifuged (7000 rpm × 15 minutes) to remove yeast, and the 2M3MB concentration was measured. As a control, fermentation was carried out in the same manner except that EMBal which is a chemically synthesized product was not added, and the 2M3MB concentration of the fermentation solution was measured. The measurement of the 2M3MB concentration of the fermentation solution was carried out according to the method of Iijima et al. (Non-Patent Document 3).

As a result, 2M3MB was not detected from the fermentation solution after the fermentation when cultured in the medium in which EMBal was not added, while the 2M3MB concentration of the fermentation solution cultured in the medium in which 20 ppb EMBal was added, was 1.26 ppb. From these results, it was found that 2M3MB precursor is EMBal, and 2M3MB is synthesized by yeast metabolizing EMBal in the fermentation step.

### [Reference Example 2]

With respect to the hops before isomerization treatment and after isomerization treatment, the EMBal contents were measured, and it was investigated whether EMBal was a component derived from the hops which had been isomerized. Nugget variety was used for the hops.

Specifically, the content of EMBal was measured before and after the isomerization treatment for the hops and the aging hops (hop pellets oxidized at 37 °C for 1 week in air). Since EMBal cannot be measured unless it is in a solution state, one obtained by suspending hops in water at room temperature and then removing the hops was used as the sample of hops before isomerization treatment. In addition, as the sample of hops after isomerization treatment, one treated with oxygen entrapment by carrying out a hot air treatment (treatment bubbled with air at 2 L/min at 90 °C for 5 minutes) was used and the content of EMBal was measured. Further, each of the hops was added to the amino acid-added YNB medium in an amount such that the iso-α-acid concentration was 10 ppm, and further yeast was added so as to be 20 × 10⁶ cells/mL and fermented at 15 °C for 3 days. The fermentation solution after the fermentation was centrifuged (7000 rpm × 15 minutes) to remove yeast, and the 2M3MB concentration was measured.

The measurement results of the EMBal concentration and the 2M3MB concentration of each of the hops are shown in Table 3. In the table, "hops" is hops without aging treatment or hot air treatment, "aging hops" is aged hops, "hops + hot air" is hops which have been subjected to hot air treatment after isomerization treatment to aging-untreated hops, "aging hops + hot air" shows the results of hops subjected to hot air treatment after isomerization treatment on aging-treated hops.

**[Table 3]**

| Sample | EMBal (ppb) | | 2M3MB (ppb) |
|---|---|---|---|
| | Before Isomerization Treatment | After Isomerization Treatment | After Fermentation |
| Hop | 0 | 1.7 | 0.09 |
| Aging Hops | 0 | 1.8 | 0.09 |
| Hops + Hot Air | | 16.3 | 0.80 |
| Aging Hops + Hot Air | | 12.1 | 0.60 |

As a result, EMBal was not detected in the hops before the isomerization treatment, but detected from the hops after isomerization treatment, and the EMBal concentration was increased by the hot air treatment. In addition, as the content of EMBal in the hops used was larger, 2M3MB was produced more in the fermentation. From these results, it was confirmed that EMBal is produced by bringing oxygen into contact with the hops after isomerization treatment, and that 2M3MB was produced by EMBal being metabolized to yeast. In addition, since there was no difference in EMBal concentration after isomerization treatment between hops and aging hops, it was also confirmed that EMBal was not generated even if aging treatment (oxidation treatment) was performed on the hops before isomerization treatment.

### [Example 1]

60 g of malt, 20 g of auxiliary raw material and 320 mL of water were mixed, then the resulting mixture was maintained at 50 °C for 30 minutes to carry out a proteolytic treatment and further kept at 65 °C for 70 minutes, thereby saccharifying the component derived from the malt. The obtained wort was filtered, and hops (American variety) were added to the resulting filtrate to boil for 90 minutes. After the boiling treatment, hot water for adjusting the concentration was added, then hop cake and the like were separated, followed by cooling to 5 °C to obtain wort (300 mL). Thirteen kinds of wort (Samples 1 to 13) were prepared by appropriately changing the lot of malt to be used, the amount of hops to be added, the type of auxiliary raw material and the like. The concentrations of EMBal in the wort were measured. The measurement results are shown in Table 4.

Next, yeast was added to 200 ml of wort so that the concentration of the yeast was 20 × 10⁶ cells/ml, followed by fermenting at 15 °C for 6 days. The fermented solution (fermented beer-like effervescent beverage) after the fermentation was centrifuged (7000 rpm × 15 minutes) to remove the yeast, and the 2M3MB concentration was measured. With respect to the fermented solution obtained, an onion-like odor was sensory evaluated with evaluation scores of four stages of 0 to 3 (0: not felt, 1: slightly felt, 2: felt, 3: strongly felt) by 5 panels. Table 4 shows the measured value of the 2M3MB concentration of each fermentation solution and the average value of the evaluation scores by all panels.

**[Table 4]**

| Sample | Average Value of Sensory Evaluation Score of Onion-Like Odor | 2M3MB (ppb) | EMBal (ppb) |
|---|---|---|---|
| 1 | 0 | 0.19 | 3.28 |
| 2 | 0.4 | 0.41 | 7.45 |
| 3 | 0.4 | 0.41 | 7.38 |
| 4 | 0.4 | 0.23 | 4.52 |
| 5 | 0.4 | 0.31 | 5.8 |
| 6 | 0.8 | 0.47 | 8.8 |
| 7 | 1 | 0.51 | 10.23 |
| 8 | 1 | 0.57 | 11.3 |
| 9 | 1.2 | 0.61 | 11.3 |
| 10 | 1.2 | 0.85 | 16.8 |
| 11 | 1.6 | 1.09 | 20.2 |
| 12 | 2.4 | 1.06 | 21 |
| 13 | 2.6 | 1.32 | 23 |

As a result, a tendency was observed whereby the higher the EMBal concentration in the wort, the higher the 2M3MB concentration in the obtained fermentation solution, and the higher the 2M3MB concentration, the stronger the onion odor.

### [Example 2]

The influence of the oxygen supply amount to the fermentation solution on the EMBal concentration of the fermentation solution during the fermentation was investigated.

Specifically, wort (300 mL) was obtained in the same manner as in Example 1. The bitterness unit (BU) of the obtained wort was measured. The bitterness unit was measured according to Analytica-EBC standard method of EBC (European Brewery Convention).

Next, yeast was added to 200 mL of the obtained wort so that the concentration of the yeast was 20 × 10⁶ cells/mL, followed by fermenting at 10 °C for 6 days. Bubbling of air into the fermentation solution was carried out and oxygen was brought into contact with the fermentation solution for 240 minutes or 370 minutes from the start of the fermentation. A portion of the fermentation solution after completion of the bubbling was taken and the EMBal concentration thereof was measured. The 2M3MB concentration was measured in the same manner as in Example 1 for the solution obtained by centrifuging the fermentation solution (7000 rpm × 15 minutes) to remove the yeast (fermented beer-like effervescent beverage).

Table 5 shows the measurement results of the bitterness unit in wort (BU), fermentation temperature (°C) ("solution temperature" in the table), oxygen contact time (air bubbling time) (minutes), dissolved oxygen amount (DO) (ppm) of the fermentation solution in the wort, EMBal concentration of the fermentation solution after completion of bubbling during the fermentation ("EMBal during fermentation" in the table) (ppb) and the 2M3MB concentration (ppb) of the fermentation solution after fermentation. As a result, it was found that EMBal is produced by oxygen supplied to the fermentation solution during the fermentation, and for this reason, the greater the supply amount of oxygen to the fermentation solution, the higher the 2M3MB concentration of the obtained fermentation solution.

**[Table 5]**

| Sample | Bitterness Unit in Wort (BU) | Solution Temperature (°C) | Oxygen Contact Time (min) | DO (ppm) | EMBal During Fermentation (ppb) | 2M3MB After Fermentation (ppb) |
|---|---|---|---|---|---|---|
| 1 | 30 | 10 | 370 | 11.2 | 11.4 | 0.56 |
| 2 | 30 | 10 | 240 | 11.2 | 7.6 | 0.38 |

### [Example 3]

The effect of temperature on the EMBal concentration in wort was investigated.

Specifically, first, as in Example 1, wort (300 mL) was obtained and the bitterness unit was measured. Subsequently, the obtained wort was subjected to oxygen entrapment treatment (bubbling of air at 2 L / min) at a solution temperature of 0, 20, 50, 70, or 90 °C for 5 minutes, then the EMBal concentration was measured. When raising the solution temperature of the wort from room temperature, a warm water bath was heated on a hot plate and when lowering the temperature from room temperature a constant temperature water tank was used. Yeast was added to 200 ml of the wort which was subjected to oxygen entrapment treatment so that the concentration of the yeast was 20 × 10⁶ cells/ml, followed by fermenting at 15 °C for 6 days. With respect to the fermentation solution after the fermentation, the 2M3MB concentration was measured in the same manner as in Example 1.

The measurement results of the bitterness unit (BU) in wort, the solution temperature (°C) during the entrapment of oxygen ("solution temperature" in the table), the oxygen contact time (air bubbling time) (min), the dissolved oxygen amount (DO) (ppm), the EMBal concentration in the wort after the entrapment of oxygen ("EMBal in wort" in the table) (ppb), and the 2M3MB concentration (ppb) of the fermentation solution after the fermentation are shown in Table 6. As a result, it was found that when oxygen is supplied to the wort, the higher the solution temperature, the more EMBal was produced.

**[Table 6]**

| Sample | Bitterness Unit in Wort (BU) | Solution Temperature (°C) | Oxygen Contact Tim (min) | DO (ppm) | EMBal in wort (ppb) | 2M3MB After Fermentation (ppb) |
|---|---|---|---|---|---|---|
| 1 | 30 | 0 | 5 | 14.0 | 7.1 | 0.39 |
| 2 | 30 | 20 | 5 | 9.0 | 10.6 | 0.51 |
| 3 | 30 | 50 | 5 | 5.5 | 13.1 | 0.66 |
| 4 | 30 | 70 | 5 | 3.8 | 19.5 | 0.96 |
| 5 | 30 | 90 | 5 | 1.6 | 21.0 | 1.0 |

### [Example 4]

The influence of oxygen contact amount at a high temperature on the EMBal concentration in wort was investigated.

Specifically, first, as in Example 1, wort (300 mL) was obtained and the bitterness unit was measured. Next, the obtained wort was subjected to oxygen entrapment treatment in the same manner as in Example 3 at a solution temperature of 90 °C for 0, 1, 5, or 20 minutes, and then the EMBal concentration was measured. Yeast was added to 200 ml of wort after oxygen entrapment treatment so that the concentration of the yeast was 20 × 10⁶ cells/ml and fermented at 15 °C for 6 days. With respect to the fermentation solution after completion of the fermentation, the 2M3MB concentration was measured in the same manner as in Example 1.

The measurement results of the bitterness unit (BU) in wort, the solution temperature (°C) during the entrapment of oxygen ("solution temperature" in the table), the oxygen contact time (air bubbling time) (min), the dissolved oxygen amount (DO) (ppm), the EMBal concentration of wort ("EMBal in wort" in the table) (ppb) and the 2M3MB concentration (ppb) of fermentation solution after fermentation are shown in Table 7. As a result, it was found that the synthesis of EMBal at a high temperature occurred faster than at a low temperature, and the larger the supply amount of oxygen, the more EMBal was produced.

**[Table 7]**

| Sample | Bitterness Unit in Wort (BU) | Solution Temperature (°C) | Oxygen Contact Tim (min) | DO (ppm) | EMBal in wort (ppb) | 2M3MB After Fermentation (ppb) |
|---|---|---|---|---|---|---|
| 1 | 30 | 90 | 0 | 1.6 | 7.1 | 0.39 |
| 2 | 30 | 90 | 1 | 1.6 | 17.1 | 0.85 |
| 3 | 30 | 90 | 5 | 1.6 | 21.0 | 1.0 |
| 4 | 30 | 90 | 20 | 1.6 | 23.8 | 1.1 |

### [Example 5]

The influence of the iso-α-acid content on the EMBal concentration in wort was investigated.

Specifically, first, wort (300 mL) was obtained in the same manner as in Example 1 except that the addition amount of hops was adjusted so that the iso-α-acid content was 0.1 to 2 g, and then the bitterness unit was measured.

Subsequently, for the obtained 200 mL of wort, the solution temperature was set to 90 °C, oxygen was entrapped for 520 minutes in the same manner as in Example 3, and the EMBal concentration was measured. Yeast was added to 200 ml of wort after oxygen entrapment treatment so that the concentration the yeast was 20 × 10⁶ cells/ml and then fermented at 15 °C for 6 days. With respect to the fermentation solution after completion of the fermentation, the 2M3MB concentration was measured in the same manner as in Example 1.

As a control, 200 ml of wort was fermented in the same manner as in Example 1 without oxygen entrapment treatment, and the 2M3MB concentration in the fermentation solution after fermentation was measured.

The measurement results of the bitterness unit (BU) in wort, the solution temperature (°C) during the entrapment of oxygen ("solution temperature" in the table), the oxygen contact time (air bubbling time) (min), the dissolved oxygen amount (DO) (ppm), the EMBal concentration in the wort after the entrapment of oxygen ("EMBal in wort" in the table) (ppb), and the 2M3MB concentration (ppb) in the fermentation solution after the fermentation are shown in Table 8. In addition, in the sample not treated with the oxygen entrapment, the EMBal concentration in the wort before the fermentation is shown in the table. As a result, it was found that the higher the bitterness unit of the wort, the higher the EMBal concentration of the wort after the entrapment of oxygen. In addition, even in the wort which was not treated with oxygen entrapment, the higher the bitterness unit, the higher the EMBal concentration.

**[Table 8]**

| Sample | Bitterness Unit in Wort (BU) | Solution Temperature (°C) | Oxygen Contact Tim (min) | DO (ppm) | EMBal in wort (ppb) | 2M3MB After Fermentation (ppb) |
|---|---|---|---|---|---|---|
| 1 | 0 | | | | 0.00 | ND |
| 2 | 11 | | | | 2.26 | 0.12 |
| 3 | 30 | | | | 5.12 | 0.30 |
| 4 | 50 | | | | 7.38 | 0.38 |
| 5 | 70 | | | | 8.14 | 0.42 |
| 6 | 90 | | | | 9.48 | 0.47 |
| 7 | 0 | 90 | 5 | 1.6 | 0.00 | ND |
| 8 | 11 | 90 | 5 | 1.6 | 8.22 | 0.47 |
| 9 | 30 | 90 | 5 | 1.6 | 23.05 | 1.2 |
| 10 | 50 | 90 | 5 | 1.6 | 45.63 | 2.6 |
| 11 | 71 | 90 | 5 | 1.6 | 65.23 | 3.2 |
| 12 | 91 | 90 | 5 | 1.6 | 74.55 | 4.2 |

### [Reference Example 3]

Preparative HPLC was carried out on the hops after isomerization treatment in order to investigate which component of the hops after isomerization treatment EMBal was derived from. Nugget variety was used for the hops.

Specifically, first, the hops were pulverized finely by a mill and extracted with hot water to obtain an extract solution, followed by freeze-drying. Preparative HPLC was carried out on a solution obtained by redissoving the obtained solid in a 70% methanol solution under the following conditions.

### (Preparative HPLC conditions)

Column: C18 column "XBridge C18 Prep Column" (length: 250 mm, inner diameter: 10 mm, manufactured by Waters)
Mobile phase A: 1% formic acid water
Mobile phase B: 1% formic acid-containing methanol solution
Flow rate: 15 mL/min
Gradient condition: mobile phase B concentration of 68% (0 min) → mobile phase B concentration of 72% (1 min) → mobile phase B concentration of 72% (18 min) → mobile phase B concentration of 100% (18.01 min) → migrate phase B concentration of 100% (23 minutes) → mobile phase B concentration of 68% (23.01 minutes) → mobile phase B concentration of 68% (30 minutes)
Detection wavelength: 275 nm

Five fractions, which were a fraction eluted faster than isocohumulone (fraction 1, S-fraction), a fraction eluted isocohumulone (fraction 2), a fraction eluted with n-isohumulone (fraction 3), a fraction eluted with iso-adhumulone (fraction 4) and a fraction eluted later than iso-α-acid (fraction 5), were fractionated. A chromatograph of the preparative HPLC is shown in FIG. 1. Fr. 1 to Fr. 5 in FIG. 1 are the fractions fractionated as fractions 1 to 5, respectively. The resulting fractionated solutions were freeze-dried again, dissolved again in an acetate buffer with pH 5, and aerated at 90 °C for 5 minutes. The EMBal concentration of each solution after the aeration was measured. The measurement results of the EMBal concentration (ppb) of each fraction are shown in Table 9 together with the mainly contained components and the bitterness unit (B.U.).

**[Table 9]**

| | Main Component | Bitterness Unit (B.U.) | EMBal (ppb) |
|---|---|---|---|
| Fraction 1 | Deteriorated bitterness component | 19.7 | 16.7 |
| Fraction 2 | isocohumulone | 21.6 | 18.3 |
| Fraction 3 | n-isohumulone | 30 | 25.7 |
| Fraction 4 | isoadhumlune | 6.9 | 5.9 |
| Fraction 5 | α-acid, β-acid | 8.4 | 9.6 |

The bitterness component derived from the hops can be mainly classified into a deteriorated fraction (S-fraction component, fraction 1, fraction having a retention time of 2.6 to 10 minutes in the chromatogram in FIG. 1) and an iso-α-acid (total of fraction 2, fraction 3, and fraction 4, a fraction having a retention time of 10 to 16 minutes) and an α-acid and β-acid before isomerization (fraction 5, fraction having a retention time of 21 to 26.5 minutes). The results in Table 9 show that in EMBal derived from the isomerized hops, 21.9% of them was derived from the S-fraction, 65.5% of them was derived from iso-α acid, and 12.6% of them was derived from α-acids before isomerization and the like. From these results, it was found that EMBal is mainly derived from iso-α-acid, and therefore, if hops or hop extracts containing a large amount of iso-α-acid are used, the amount of EMBal which is brought with iso-α-acid would be increased.

## Claims

1. A process for producing a fermented beer-like effervescent beverage, comprising
a fermentation step of inoculating yeast into a fermentation raw material solution to ferment, wherein
a content of 2,3-epoxy-3-methylbutanal in the fermentation raw material solution prior to the inoculation of yeast or in the fermentation solution during the fermentation step is controlled.

2. The process for producing a fermented beer-like effervescent beverage according to Claim 1, wherein
control of the content of 2,3-epoxy-3-methylbutanal is performed by controlling an amount of oxygen mixed in the fermentation raw material solution or mixed in the fermentation solution.

3. The process for producing a fermented beer-like effervescent beverage according to Claim 1 or 2, wherein
a concentration of 2,3-epoxy-3-methylbutanal in the fermentation raw material solution or in the fermentation solution is controlled to be 17 ppb or less.

4. The process for producing a fermented beer-like effervescent beverage according to any one of Claims 1 to 3, wherein
a content of iso-α-acid in the fermentation raw material solution or in the fermentation solution is 90 ppm or less.

5. The process for producing a fermented beer-like effervescent beverage according to any one of Claims 1 to 4, wherein
a temperature of the fermentation raw material solution or the fermentation solution is 5 to 100 °C.

6. The process for producing a fermented beer-like effervescent beverage according to any one of Claims 1 to 5, further comprising
a measurement step of measuring the concentration of 2,3-epoxy-3-methylbutanal in the fermentation raw material solution or in the fermentation solution.

7. A process for producing a fermented beer-like effervescent beverage, comprising
a fermentation step of inoculating yeast into a fermentation raw material solution to ferment, and
a measurement step of measuring a content of 2,3-epoxy-3-methylbutanal in the fermentation raw material solution prior to the inoculation of yeast or in the fermentation solution during the fermentation step.

8. A fermentation raw material solution comprising 2,3-epoxy-3-methylbutanal at a concentration of 17ppb or less.
